# EUROPÄISCHE PATENTSCHRIFT

(11) **EP 4 094 562 B1**
(45) Veröffentlichungstag und Bekanntmachung des Hinweises auf die Patenterteilung: **02.10.2024**
(21) Anmeldenummer: 22155896.8
(22) Anmeldetag: 09.02.2022
(51) Int. Cl.: A01D 41/00, A01D 41/06, A01D 45/00, A01D 63/00, A01D 63/04

(54) **MÄHDRESCHER**
COMBINE HARVESTER
MOISSONNEUSE-BATTEUSE

(30) Priorität: 27.05.2021 DE 102021113736
(43) Veröffentlichungstag der Anmeldung: 30.11.2022
(73) Patentinhaber: CLAAS Selbstfahrende Erntemaschinen GmbH, 33428 Harsewinkel (DE)
(72) Erfinder: Neitemeier, Dennis, 59510 Lippetal (DE); Baumgarten, Joachim, 48361 Beelen (DE); Bormann, Bastian, 33334 Gütersloh (DE); Wilken, Andreas, 49143 Bissendorf (DE); Spiekermann, Sebastian, 48346 Ostbevern (DE); Irmer, Daniel, 33442 Herzebock-Clarholz (DE); Witte, Johann, 58730 Fröndenberg (DE)
(74) Vertreter: CLAAS Gruppe

(56) Entgegenhaltungen:
- EP-A1- 1 733 606
- EP-A1- 3 516 946
- EP-A1- 3 603 379
- FR-A5- 2 192 443

## Beschreibung

Die vorliegende Erfindung betrifft einen Mähdrescher gemäß dem Oberbegriff des Anspruches 1.

Ein Mähdrescher der eingangs genannten Art ist aus der EP 3 603 379 A1 bekannt. Darin sind Halmteiler beschrieben, welche durch jeweils einen Antrieb um eine Hochachse schwenkbar sind. Eine Steuereinrichtung bestimmt anhand empfangener Betriebsdaten, an welcher Seite eines Vorsatzgerätes sich Erntegut befindet, um den jeweils aktiven Antrieb zu bestimmen. Der jeweils als aktiv bestimmte Antrieb wird in Abhängigkeit von einem Lenkwinkel des Mähdreschers durch eine Steuereinheit angesteuert, um den aktiven Antrieb möglichst quer zur Fahrtrichtung des Halmteilers zu orientieren. Der andere Antrieb, der sich auf der Seite des Vorsatzgerätes befindet, an der stehender Erntegutbestand fehlt, wird angesteuert, um den Halmteiler in eine nach vorn oder außen oder innen gerichtete Ruhestellung zu verbringen. EP 1 733 606 A1 offenbart einen weiteren Mähdrescher, bei der die Stängelführungselemente während der Kurvenfahrt hinsichtlich ihrer Ausrichtung in Bezug auf den Kurvenradius automatisch, durch die Verwendung von Hydraulikzylindern, nachkorrigiert werden.

Ausgehend von dem vorstehend genannten Stand der Technik liegt der Erfindung die Aufgabe zugrunde, einen Mähdrescher der eingangs genannten Art weiterzubilden, welcher sich durch eine verbesserte Führung der Halmteiler bei einer Kurvenfahrt auszeichnet.

Diese Aufgabe wird aus vorrichtungstechnischer Sicht ausgehend vom Oberbegriff des Anspruchs 1 in Verbindung mit dessen kennzeichnenden Merkmalen gelöst. Die hierauf folgenden abhängigen Ansprüche geben jeweils vorteilhafte Weiterbildungen der Erfindung wieder.

Gemäß dem Anspruch 1 wird ein Mähdrescher vorgeschlagen, mit einem Fahrwerk mit mindestens zwei bezogen auf die Fahrzeuglängsachse gegenüberliegenden Fahrwerksrädern, wobei das Fahrwerk einen Fahrantrieb für die Erzeugung eines Vortriebs entlang einer Kurvenbahn und eine Lenkeinrichtung für die Einstellung einer Soll-Bahnkurve in Abhängigkeit von einem Lenkwinkel aufweist, sowie mit einem Vorsatzgerät zur Aufnahme von Erntegut, wobei an dem Vorsatzgerät seitlich Halmteiler zur Aufteilung von Erntegut an einer Grenze zwischen stehenbleibendem und abzuerntenden Bestand angeordnet sind, die in Vorwärtsfahrtrichtung des Mähdreschers gesehen zumindest mit ihrer Spitze über das Vorsatzgerät hinausragen, wobei die Halmteiler durch jeweils einen Aktor um eine Hochachse schwenkbar sind. Erfindungsgemäß ist vorgesehen, dass die Lenkeinrichtung mit einer Steuereinheit verbunden ist, welche dazu eingerichtet ist, die Aktoren zur Ausführung einer Schwenkbewegung des jeweiligen Halmteilers in Abhängigkeit von dem Lenkwinkel anzusteuern, so dass die Spitze des jeweiligen Halmteilers einer zur Kurvenbahn des Mähdreschers koaxialen Kurvenbahn folgt. Das Vorsatzgerät beschreibt beim Befahren einer kreisförmigen oder bogenförmigen Kurvenbahn zu Beginn eines Dreschvorgangs oder zum Umfahren von Hindernissen mit seinen äußeren Enden jeweils eine innere Kreisbahn und eine äußere Kreisbahn. Der Radius der inneren Kreisbahn entspricht dem äußersten Punkt des Vorsatzgerätes, an dem Erntegut durch das Vorsatzgerät aufgenommen wird. Der Radius der äußeren Kreisbahn beschreibt den Weg, entlang dessen die vorauseilende Spitze als äußerster Punkt des Halmteilers geführt wird. Das Verschwenken der Spitze des jeweiligen Halmteilers in Abhängigkeit vom Lenkwinkel hat den Vorteil, dass bei einer Kurvenfahrt die Zuführung des Erntegutbestands sowohl zu beiden Seiten des Vorsatzgerätes verbessert wird, indem die nur von den Halmteilern überstrichene Fläche minimiert wird, wodurch die durch das Vorsatzgerät hervorgerufenen Erntegutverluste sinken.

Der Erfindung liegt der Gedanke zugrunde, dass durch das Verschwenken des jeweiligen Halmteilers in Abhängigkeit vom Lenkwinkel erreicht wird, dass die jeweilige Spitze dem Verlauf ihrer jeweiligen äußeren Kreisbahn folgt und dabei entlang des jeweiligen Umfangs der äußeren Kreisbahn stehendes Erntegut jeweils nach innen zum Vorsatzgerät hin umlenkt. Die jeweilige beim Befahren einer kreisförmigen oder bogenförmigen Kurvenbahn nur von den gegenüber dem Vorsatzgerät vorauseilenden Halmteilern überstrichene Fläche, die zum Auftreten von Erntegutverlusten führt, wird minimiert. Dabei nimmt der erzielbare Effekt mit abnehmender Vorsatzgerätebreite zu.

Bei dem Vorsatzgerät kann es sich insbesondere um ein Getreideschneidwerk handeln. Das Getreideschneidwerk kann mit einem starren Schneidwerksrahmen oder einem flexiblen Schneidwerksrahmen ausgeführt sein.

Erfindungsgemäß sind die Aktoren zum Verschwenken der Halmteiler als Hydraulikzylinder ausgeführt.

Erfindungsgemäß sind die Hydraulikzylinder als elektrohydraulisch, proportional angesteuerte Differentialzylinder ausgeführt. Die als Differentialzylinder mit integrierter Lageregelung ausgeführten Hydraulikzylinder können in jeder beliebigen Stellung angefahren werden und können unabhängig von äußeren Kräften in dieser Position gehalten werden. Hierdurch lässt sich der Lenkwinkel präzise auf die Verstellung der Halmteiler übertragen.

Insbesondere kann der jeweilige Halmteiler einen Hauptteiler umfassen, der an einem profilierten Rahmenelement angeordnet ist. Mittels des Rahmenelementes kann der Halmteiler an dem Vorsatzgerät lösbar befestigt sein. Weiterhin kann der Halmteiler einen Innenabweiser und einen Außenabweiser aufweisen,

Dabei kann das Rahmenelement zumindest zweiteilig ausgeführt sein, wobei ein vorderer Rahmenabschnitt und ein hinterer Rahmenabschnitt durch ein zur Hochachse koaxial angeordnetes Gelenk miteinander verbunden sind, um das der vordere Rahmenabschnitt des Rahmenelementes um die Hochachse schwenkbar ist. Der jeweilige dem Halmteiler zugeordnete Aktor greift im Bereich des Gelenks mit einem Ende am hinteren Rahmenabschnitt an und mit seinem anderen Ende an dem vorderen Rahmenabschnitt an, um den vorderen Rahmenabschnitt relativ zu hinteren Rahmenabschnitt zu bewegen.

Weiter bevorzugt kann der jeweilige Halmteiler durch einen zusätzlichen Aktor gegenüber dem Vorsatzgerät höhenverstellbar sein. Die Veränderung des vertikalen Abstands des jeweiligen Halmteilers zum Boden durch eine Auslenkung in Fahrzeughochrichtung ist insbesondere in Erntesituationen vorteilhaft, in denen das Vorsatzgerät in einem geringen vertikalen Abstand zum Boden geführt wird. Ein solche Erntesituation kann beispielsweise das Aufnehmen von Lagergetreide sein. Durch eine Erhöhung des vertikalen Abstands der Halmteiler, insbesondere der dem Vorsatzgerät vorauseilenden Spitze des jeweiligen Halmteilers, zum Boden wird der Gefahr von Beschädigungen des Halmteilers begegnet. Hierzu kann der Halmteiler durch das hintere Rahmenelement um eine im Wesentlichen horizontal verlaufende Schwenkachse an dem Vorsatzgerät angelenkt sein. Alternativ kann der jeweilige zusätzliche Aktor an dem vorderen Rahmenabschnitt angreifen, um diesen in vertikaler Fahrzeughochrichtung auszulenken.

Insbesondere können die zusätzlichen Aktoren als Hydraulikzylinder oder als Linearmotoren ausgeführt sein. Besonders bevorzugt sind die zusätzlichen Aktoren vom gleichen Typs wie die Aktoren zum Verschwenken der Halmteiler um die Hochachse. Durch die Vereinheitlichung kann der Aufwand hinsichtlich der Ansteuerung reduziert werden.

Gemäß einer bevorzugten Weiterbildung können an dem Vorsatzgerät seitlich angeordnete Seitenmesser um die jeweilige Hochachse verschwenkbar sein, wobei zum Verschwenken das jeweilige Seitenmesser mit dem Aktor verbindbar ist, um in Abhängigkeit von dem Lenkwinkel die Ausführung einer Schwenkbewegung des jeweiligen Seitenmessers anzusteuern, wobei das jeweilige Seitenmesser im Wesentlichen der zur Kurvenbahn des Mähdreschers koaxialen Kurvenbahn folgt. Die Steuereinheit kann dazu eingerichtet sein, die Stellmittel zum Verschwenken der Seitenmesser analog der Verstellung der Halmteiler anzusteuern. Die Ansteuerung erfolgt insbesondere zeitgleich. Seitenmesser kommen insbesondere bei Sonderkulturen wie Raps, die eine starke Verwachsung der Stängel und Fruchtteile ineinander zeigen und zudem auf Berührung stark reagieren, anstelle der Halmteiler zum Einsatz. Die Seitenmesser gewährleisten eine gute Trennung des Halmgutes zwischen dem noch stehenden und dem vom Vorsatzgerät aufzunehmenden. So können bei Raps die reifen Fruchtschoten bei einer Berührung mit den Seitenmessern leicht aufspringen, woraufhin die Rapskörner als Ernteverluste auf den Boden des Feldes gelangen. Durch das Verschwenken der Seitenmesser lassen sich diese Erntegutverluste vor dem Vorsatzgerät weiter reduzieren.

Weiterhin kann die Steuereinheit dazu eingerichtet sein, für die Ansteuerung der zusätzlichen Aktoren ein Steuersignal zu empfangen und auszuwerten, welches der Einstellung des Abstands des Schneidwerks zum Boden dient. Das Steuersignal kann von einer übergeordneten Steuerungsvorrichtung generiert werden, welche auch weitere Arbeitsorgane und Aktoren des Mähdreschers ansteuert.

Bevorzugt kann ein Lenkrad mit einem zugeordneten Lenkwinkelgeber vorgesehen sein, welcher den Lenkwinkel als Steuersignal für die Steuereinheit vorgibt. Alternativ oder zusätzlich kann es aber auch vorgesehen sein, dass der Lenkwinkel von einem nicht dargestellten Fahrerassistenzsystem vorgegeben wird, welches der automatischen Einstellung vorbestimmter Soll-Fahrspuren des landwirtschaftlichen Fahrzeugs dient.

Gemäß einer bevorzugten Weiterbildung können die Aktoren dazu eingerichtet sein, den vorderen Rahmenabschnitt des jeweiligen Halmteilers in eine eingeschwenkte Transportstellung, in welcher der jeweilige Halmteiler im Wesentlichen quer zum Vorsatzgerät orientiert ist, und in eine ausgeschwenkte Arbeitsstellung, in welcher der jeweilige Halmteiler im Wesentlichen senkrecht zum Vorsatzgerät orientiert ist, zu überführen.

Die vorliegende Erfindung wird nachstehend anhand eines in den Zeichnungen dargestellten Ausführungsbeispieles näher erläutert.

Es zeigen:
- Fig. 1: schematisch einen Mähdrescher mit einem Vorsatzgerät;
- Fig. 2: exemplarisch und schematisch eine Darstellung eines Halmteilers am Vorsatz-gerät in einer Seitenansicht;
- Fig. 3: exemplarisch und schematisch eine Ansicht des Halmteilers von oben;
- Fig. 4: exemplarisch und schematisch eine Seitenansicht des Vorsatzgerätes; und
- Fig. 5: exemplarisch eine von dem Mähdrescher abzufahrende Kurvenbahn.

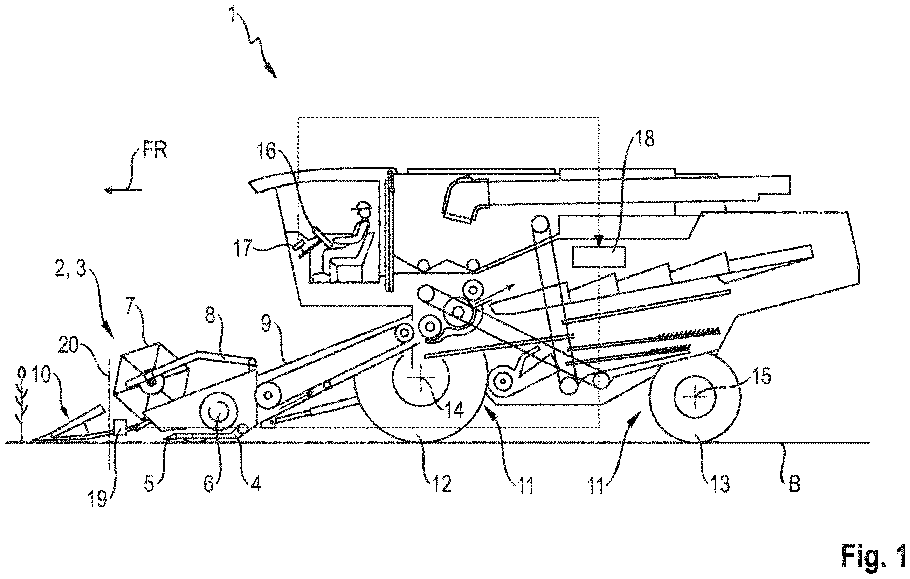

Die Darstellung in Fig. 1 zeigt schematisch einen Mähdrescher 1 mit einem daran angeordneten Vorsatzgerät 2. Das Vorsatzgerät 2 ist als ein Schneidwerk 3 ausgeführt. Eine Vorwärtsfahrtrichtung des Mähdreschers 1 ist durch einen Pfeil FR gezeigt. Das im Frontbereich des Mähdreschers 1 querliegend angeordnete Schneidwerk 3 weist einen Schneidtisch 4 mit einem daran angeordneten Messerbalken 5 auf, dem eine Querfördervorrichtung 6 zugeordnet und eine an Haspeltragarmen 8 angeordnete Haspel 7 mit Zinken vorgelagert ist. Das Vorsatzgerät 2 ist an einem Einzugskanal 9 angeordnet. Weiterhin sind dem Vorsatzgerät 2 zwei seitliche Halmteiler 10 vorgelagert, die in ihrer Arbeitsstellung in Vorwärtsfahrtrichtung FR zeigen und nach vorn vom Vorsatzgerät 2 abstehen, d.h. in Vorwärtsfahrrichtung FR über dieses hinausragen.

Der Mähdrescher 1 weist ein Fahrwerk 11 mit mindestens zwei bezogen auf seine Fahrzeuglängsachse LA gegenüberliegenden Fahrwerksrädern 12, 13 auf, die an einer Vorderachse 14 und einer Hinterachse 15 angeordnet sind. Das Fahrwerk 11 weist weiter einen nicht dargestellten Fahrantrieb für die Erzeugung eines Vortriebs des Mähdreschers 1 entlang einer Bahn auf. Als "Bahn" des Mähdreschers 1 wird vorliegend der Verlauf eines Referenzpunktes auf der Fahrzeuglängsachse LA während der Fahrt des Mähdreschers 1 verstanden. Für die Einstellung einer Soll-Bahnkurve in Abhängigkeit von einem Lenkwinkel γ ist eine Lenkeinrichtung vorgesehen. Die Lenkeinrichtung basiert hier auf der Lenkbarkeit der Hinterachse 15 des Mähdreschers 1. An der Vorderachse 14 kann anstelle der Fahrwerksräder 12 auch beidseitig ein Raupenlaufwerk angeordnet sein.

Bei dem obigen Lenkwinkel γ, der maßgeblich für die Einstellung einer Soll-Bahnkurve ist, handelt es sich vorzugsweise um den Lenkwinkel γ eines Lenkrades 16 des Mähdreschers 1. Hierfür ist das Lenkrad 16 mit einem zugeordneten Lenkwinkelgeber 17 ausgestattet, aus dem sich der jeweilige Lenkwinkel γ des Lenkrades 16 ableiten lässt, welcher der Ansteuerung der Lenkeinrichtung dient. Alternativ oder zusätzlich kann es aber auch vorgesehen sein, dass der Lenkwinkel γ von einem nicht dargestellten Fahrerassistenzsystem vorgegeben wird, welches der automatischen Einstellung vorbestimmter Soll-Fahrspuren des Mähdreschers 1 dient. Von dem Lenkwinkelgeber 17 werden Signale an eine Steuereinheit 18 zur Auswertung und Weiterverarbeitung übertragen. Die Steuereinheit 18 ist mit Aktoren 19 an den Halmteilern 10 signaltechnisch verbunden. Die Steuereinheit 18 steuert die Aktoren 19 in Abhängigkeit vom Lenkwinkel γ an.

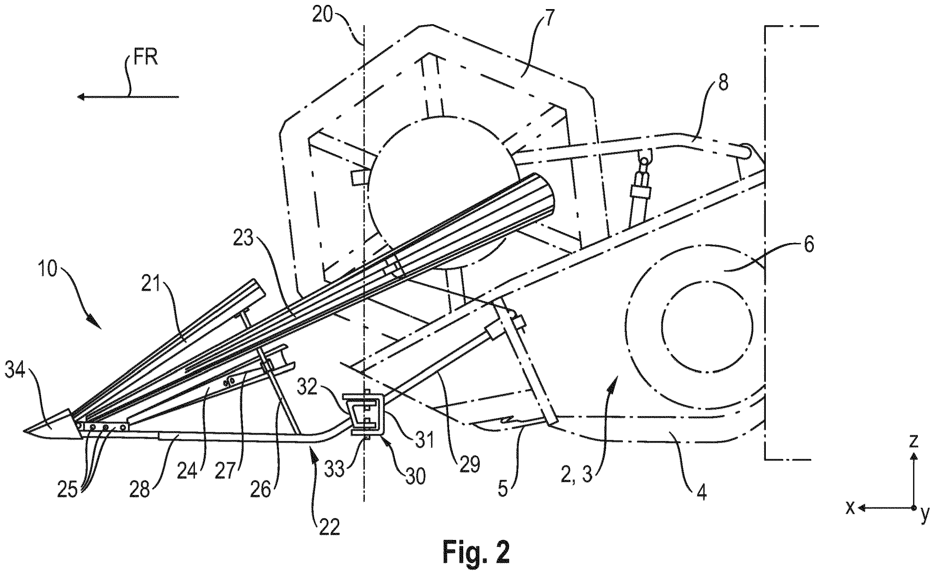

In Fig. 2 ist exemplarisch und schematisch eine Darstellung des Halmteilers 10 am Vorsatzgerät 2 in einer Seitenansicht gezeigt. Mit x ist die Fahrzeuglängsrichtung, mit y die Fahrzeugquerrichtung und mit z die Fahrzeughochrichtung bezeichnet. Jeder der beiden Halmteiler 10 umfasst einen Hauptteiler 21, der an einem profilierten Rahmenelement 22 angeordnet ist. Weiterhin können ein Innenabweiser 23 und ein Außenabweiser 24 vorgesehen sein, wobei der Innenabweiser 23 und der Außenabweiser 24 mit ihrem vorderen Ende in einer Lagerstelle 25 des Rahmenelementes 22 hakenartig eingehängt und somit beweglich gegenüber der Lagerstelle 25 in Seiten- und Höhenrichtung gehalten sind.

Der Hauptteiler 21 kann durch eine Stütze 26 in seiner schräg nach oben und entgegen der Vorwärtsfahrtrichtung FR zeigenden Stellung gegenüber dem Rahmenelement 22 fixiert sein und der Innenabweiser 23 kann durch eine weitere Stütze 27, die sich an der Stütze 26 abstützt, in seiner schräg nach innen und oben und entgegen der Vorwärtsfahrtrichtung FR angestellten Schräglage gehalten sein.

Das Rahmenelement 22 ist vorzugsweise zweiteilig ausgeführt, wobei ein vorderer Rahmenabschnitt 28 und ein hinterer Rahmenabschnitt 29 durch ein zur Hochachse 20 koaxial angeordnetes Gelenk 30 miteinander verbunden sind, um das der vordere Rahmenabschnitt 28 des Rahmenelementes 22 um die Hochachse 20 schwenkbar ist. Das Gelenk 30 jedes Halmteilers 10 kann beispielsweise von zwei ineinandergreifenden im Wesentlichen U-förmigen Gelenkprofilen 31, 32 und einer diese beiden Gelenkprofile 31, 32 gegeneinander verschwenkbaren, vertikalen Achse 33, die mit der Hochachse 20 zusammenfällt, gebildet sein. Ein Gelenkprofil 32 ist am vorderen Rahmenabschnitt 28 befestigt und das andere Gelenkprofil 31 am hinteren Rahmenabschnitt 29, welcher in einer Seitenwand des Vorsatzgerätes 2 festgelegt ist. Die frontseitige Lagerstelle 25 jedes Halmteilers 10 kann für seinen Hauptteiler 21 sowie den Innenabweiser 23 und den Außenabweiser 24 von einem Schuh als Spitze 34 des Halmteilers 10 überfasst sein. Die Spitze 34 des Halmteilers 10 stellt den Punkt an dem Vorsatzgerät 2 dar, welcher in Fahrrichtung FR gesehen vorauseilt.

Die an dem Gelenk 30 und dem vorderen Rahmenabschnitt 28 angelenkten Aktoren 19 des jeweiligen Halmteilers 10 sind als Hydraulikzylinder 35 oder als Linearmotoren ausgeführt. Die Aktoren 19 umfassen eine Kolbenstange 36, deren Position exakt vorgebbar ist. Bei einer Ausführung der Aktoren 19 als Hydraulikzylinder 35 können diese als elektrohydraulisch, proportional angesteuerte Differentialzylinder ausgeführt sein. Die als Differentialzylinder mit integrierter Lageregelung ausgeführten Hydraulikzylinder 35 können in jeder beliebigen Stellung der Kolbenstange 36 angefahren werden und können unabhängig von äußeren Kräften in dieser Position gehalten werden. Dies ermöglicht eine präzise lenkwinkelabhängige Einstellung der Orientierung der Spitze 34, damit diese entsprechend dem Lenkwinkel γ zur Kurvenbahn 47 koaxialen Kurvenbahn 42 des Mähdreschers 1 folgt.

Durch die Ansteuerung des jeweiligen Aktors 19 durch die Steuereinheit 19 kann der vordere Rahmenabschnitt 28 mit der Spitze 34 um die Hochachse 20 in Fahrzeugquerrichtung y gesehen nach innen und außen geschwenkt werden, was durch den Pfeil 37 als Schwenkrichtung veranschaulicht ist.

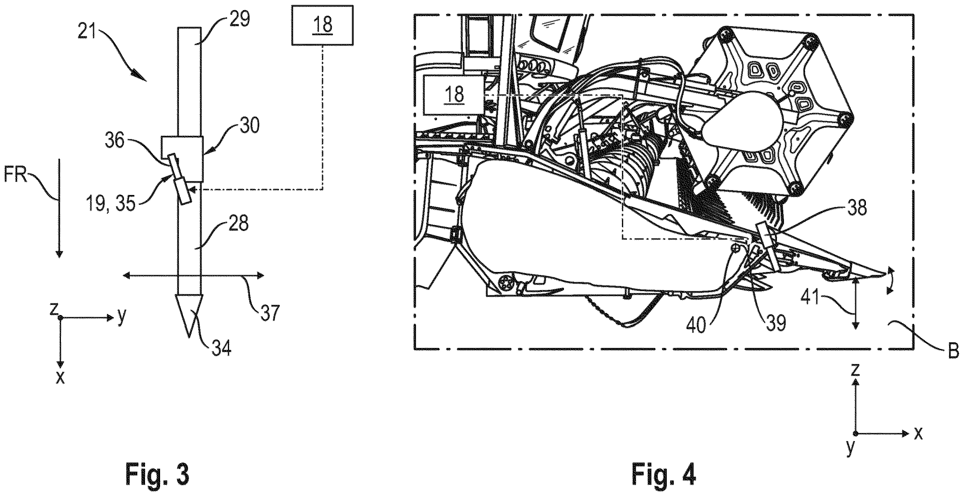

In Fig. 4 ist exemplarisch und schematisch eine Seitenansicht des Vorsatzgerätes 2 dargestellt. An dem jeweiligen Halmteiler 10 ist ein zusätzlicher Aktor 38 angeordnet, der als ein Linearantrieb ausgeführt ist. Insbesondere können die zusätzlichen Aktoren 38 als Hydraulikzylinder oder als Linearmotoren ausgeführt sein. Die zusätzlichen Aktoren 38 dienen der Höhenverstellung des Halmteilers 10. Hierfür kann der hintere Rahmenabschnitt 29 an einem Gelenkpunkt 39 angelenkt sein. Der jeweilige Halmteiler 10 ist dadurch um eine zur Fahrzeugquerrichtung y parallele Schwenkachse 40 schwenkbar, wodurch ein Abstand 41 der Spitze 34 zum Boden B veränderbar ist. Die Veränderung der Höhe des jeweiligen Halmteilers 10 gegenüber dem Boden ist insbesondere in Erntesituationen vorteilhaft, in denen das Vorsatzgerät 2 in einem geringen Abstand zum Boden B geführt wird, wenn beispielsweise Lagergetreide aufgenommen werden soll. Durch eine Erhöhung des Abstands 41 der Halmteiler 10, insbesondere der dem Vorsatzgerät 2 vorauseilenden Spitze 34 des jeweiligen Halmteilers 10, zum Boden wird der Gefahr von Beschädigungen des Halmteilers 10 begegnet.

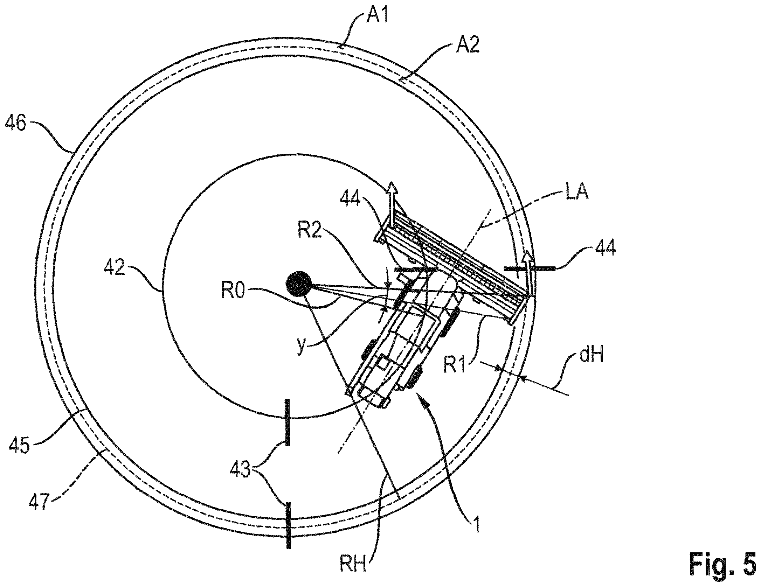

In Fig. 5 ist exemplarisch eine von dem Mähdrescher 1 abzufahrende Kurvenbahn 42 dargestellt. Beispielhaft wird angenommen, dass der Mähdrescher 1 für eine Kurvenfahrt zum Umfahren eines Hindernisses annähernd einen Viertelkreis entlang der Kurvenbahn 42 abfährt, gekennzeichnet durch einen Startpunkt 43 und einen Endpunkt 44. Die Kurvenbahn 42 hat einen Radius R0, welcher dem Wenderadius des Mähdreschers 1 entspricht. Der äußerste Punkt des Vorsatzgerätes 2, an dem Erntegut durch das Vorsatzgerät 2 aufgenommen wird, ist verläuft entlang einer inneren Kreisbahn 45 mit einem Radius R1. Der Radius R1 bestimmt sich aus dem Radius R0 und der halben Gesamtbreite des Vorsatzgerätes 2. Eine äußere Kreisbahn 46 mit einem Radius R2 beschreibt den Weg, entlang dessen die vorauseilende Spitze 34 als äußerster Punkt des Halmteilers 10 geführt wird, wenn der Halmteiler 10 in seiner senkrecht zum querverlaufenden Messerbalken 5 des Vorsatzgerätes 2 orientierten Stellung gehalten wird. Der Radius R2 ergibt sich aus der Addition des Radius R1 und einem Überstand dH gegenüber dem Vorsatzgerät 2 der vorauseilenden Spitze 34 als äußerstem Punkt des Halmteilers 10. Bedingt durch den Überstand dH des Halmteilers 10 wird stehendes Erntegut seitlich nach außen verdrängt, ohne dass es vom nacheilenden Vorsatzgerät 2 erfasst werden kann. Die zwischen der Kreisbahn 45 und der Kreisbahn 46 befindliche, im Wesentlichen einem Kreisringsegment entsprechende Fläche A1 stellt die nur von dem starren Halmteiler 10 überstrichene Fläche dar, in welchem es bei einem starr angeordneten Halmteiler 10 zu erhöhten Erntegutverlusten bereits vor der Aufnahme durch das Vorsatzgerät 2 kommt, da die Zuführung von Erntegut durch den Halmteiler 10 nur unvollständig erfolgt.

Dies gilt entsprechend für den innenliegenden, d.h. in Vorwärtsfahrtrichtung FR gesehen linken, Halmteiler 10, was aus Gründen der Übersichtlichkeit jedoch nicht dargestellt ist.

Weiterhin ist in Fig. 5 der Lenkwinkel γ eingezeichnet, der sich durch die Betätigung des Lenkrades 16 einstellt. Der von dem Lenkwinkelgeber 17 erfasste Lenkwinkel γ wird an die Steuereinheit 18 übermittelt, welche diesen als Führungsgröße zur Ansteuerung der Aktoren 19 an den Halmteilern 10 verwendet. Die Aktoren 10 verschwenken den vorderen Rahmenabschnitt 28 soweit, dass dieser eine mit dem Lenkwinkel γ übereinstimmende Ausrichtung aufweist. Die Spitze 34 folgt dabei der Kurvenbahn 42, so dass die Spitze 34 sich auf einer äußeren Kreisbahn 47 bewegt, deren Radius RH kleiner als der Radius R2 ist. Die zwischen der inneren Kreisbahn 45 und der äußeren Kreisbahn 47 befindliche, im Wesentlichen einem Kreisringsegment entsprechende Fläche A2 stellt die von dem Halmteiler 10 überstrichene Fläche dar, in welchem es zu Erntegutverlusten kommen kann. Die Fläche A1 ist kleiner als die Fläche A2, so dass eine signifikante Reduzierung der Erntegutverluste erreicht wird, wenn die Aktoren 19 zur Ausführung einer Schwenkbewegung des jeweiligen Halmteilers 10 in Abhängigkeit von dem Lenkwinkel γ angesteuert werden.

Unter Bezugnahme auf Fig. 3 wird auf eine nicht dargestellte Ausführungsform hingewiesen, wonach anstelle des jeweiligen Halmteilers 10 ein Seitenmesser oder Rapstrennmesser an dem Gelenkprofil 32 angeordnet sein kann. Grundsätzlich ist es bekannt, dass die Halmteiler 10 lösbar an dem Schneidwerk 3 angeordnet sind. Bei Sonderkulturen wie Raps kommen dann aufgrund der spezifischen Eigenschaften, beispielsweise eine starke Verwachsung der Stängel und Fruchtteile ineinander und/oder Berührungsempfindlichkeit der Fruchtkörper, die Seitenmesser zum Einsatz. Somit können die an dem Vorsatzgerät 2 seitlich angeordneten Seitenmesser analog zu den Halmteilern 10 um die jeweilige Hochachse 20 verschwenkbar sein, wobei zum Verschwenken das jeweilige Seitenmesser mit dem jeweiligen Aktor 19 verbunden ist, um in Abhängigkeit von dem Lenkwinkel γ die Ausführung einer Schwenkbewegung des jeweiligen Seitenmessers anzusteuern, wobei das jeweilige Seitenmesser im Wesentlichen der zur Kurvenbahn 42 des Mähdreschers 1 koaxialen Kurvenbahn 47 folgt.

### Bezugszeichenliste

| | | | |
|---|---|---|---|
| 1 | Mähdrescher | 34 | Spitze |
| 2 | Vorsatzgerät | 35 | Hydraulikzylinder |
| 3 | Schneidwerk | 36 | Kolbenstange |
| 4 | Schneidtisch | 37 | Schwenkrichtung |
| 5 | Messerbalken | 38 | Aktor |
| 6 | Querfördervorrichtung | 39 | Gelenkpunkt |
| 7 | Haspel | 40 | Schwenkachse |
| 8 | Haspeltragarm | 41 | Abstand |
| 9 | Einzugskanal | 42 | Kurvenbahn |
| 10 | Halmteiler | 43 | Startpunkt |
| 11 | Fahrwerk | 44 | Endpunkt |
| 12 | Fahrwerksrad | 45 | Innere Kreisbahn |
| 13 | Fahrwerksrad | 46 | Äußere Kreisbahn |
| 14 | Vorderachse | 47 | Kreisbahn |
| 15 | Hinterachse | | |
| 16 | Lenkrad | A1 | Fläche |
| 17 | Lenkwinkelgeber | A2 | Fläche |
| 18 | Steuereinheit | B | Boden |
| 19 | Aktor | dH | Überstand |
| 20 | Hochachse | FR | Vorwärtsfahrtrichtung |
| 21 | Hauptteiler | R0 | Radius |
| 22 | Rahmenelement | R1 | Radius |
| 23 | Innenabweiser | R2 | Radius |
| 24 | Außenabweiser | RH | Radius |
| 25 | Lagerstelle | LA | Längsachse |
| 26 | Stütze | γ | Lenkwinkel |
| 27 | Stütze | x | Fahrzeuglängsrichtung |
| 28 | Vorderer Rahmenabschnitt | y | Fahrzeugquerrichtung |
| 29 | Hinterer Rahmenabschnitt | z | Fahrzeughochrichtung |
| 30 | Gelenk | | |
| 31 | Gelenkprofil | | |
| 32 | Gelenkprofil | | |
| 33 | Achse | | |

## Patentansprüche

1. Mähdrescher (1), mit einem Fahrwerk (11) mit mindestens zwei bezogen auf die Fahrzeuglängsachse (LA) gegenüberliegenden Fahrwerksrädern (12, 13), wobei das Fahrwerk (11) einen Fahrantrieb für die Erzeugung eines Vortriebs entlang einer Kurvenbahn (42) und eine Lenkeinrichtung für die Einstellung einer Soll-Bahnkurve in Abhängigkeit von einem Lenkwinkel (γ) aufweist, sowie mit einem Vorsatzgerät (2, 3) zur Aufnahme von Erntegut, wobei an dem Vorsatzgerät (2, 3) seitlich Halmteiler (10) zur Aufteilung von Erntegut an einer Grenze zwischen stehenbleibendem und abzuerntenden Bestand angeordnet sind, die in Vorwärtsfahrtrichtung (FR) des Mähdreschers (1) gesehen zumindest mit ihrer Spitze (34) über das Vorsatzgerät (2, 3) hinausragen, wobei die Halmteiler (10) durch jeweils einen Aktor (19) um eine Hochachse (20) schwenkbar sind,
wobei die Lenkeinrichtung (16) mit einer Steuereinheit (18) verbunden ist, welche dazu eingerichtet ist, die Aktoren (19) zur Ausführung einer Schwenkbewegung des jeweiligen Halmteilers (10) in Abhängigkeit von dem Lenkwinkel (γ) anzusteuern, wobei die Spitze (34) des jeweiligen Halmteilers (10) einer zur Kurvenbahn (42) des Mähdreschers (1) koaxialen Kurvenbahn (47) folgt, **dadurch gekennzeichnet, dass** die Aktoren (19) als Hydraulikzylinder (35) ausgeführt sind, wobei die Hydraulikzylinder (35) als elektrohydraulisch, proportional angesteuerte Differentialzylinder ausgeführt sind.

2. Mähdrescher (1) nach dem vorangehenden Anspruch, **dadurch gekennzeichnet, dass** der jeweilige Halmteiler (10) einen Hauptteiler (21) umfasst, der an einem profilierten Rahmenelement (22) angeordnet ist.

3. Mähdrescher (1) nach Anspruch 2, **dadurch gekennzeichnet, dass** das Rahmenelement (22) zumindest zweiteilig ausgeführt ist, wobei ein vorderer Rahmenabschnitt (28) und ein hinterer Rahmenabschnitt (29) durch ein zur Hochachse (20) koaxial angeordnetes Gelenk (30) miteinander verbunden sind, durch das der vordere Rahmenabschnitt (28) des Rahmenelementes (22) um die Hochachse (20) schwenkbar ist.

4. Mähdrescher (1) nach einem der vorangehenden Ansprüche, **dadurch gekennzeichnet, dass** der jeweilige Halmteiler (10) durch einen zusätzlichen Aktor (38) gegenüber dem Vorsatzgerät (2, 3) höhenverstellbar ist.

5. Mähdrescher (1) nach Anspruch 4, **dadurch gekennzeichnet, dass** die Steuereinheit (18) dazu eingerichtet ist, für die Ansteuerung der zusätzlichen Aktoren (38) ein Steuersignal zu empfangen und auszuwerten, welches der Einstellung eines vertikalen Abstands (41) des Vorsatzgerätes (2, 3) zum Boden (B) dient.

6. Mähdrescher (1) nach einem der vorangehenden Ansprüche, **dadurch gekennzeichnet, dass** ein Lenkrad (16) mit einem zugeordneten Lenkwinkelgeber (17) vorgesehen ist, welcher den Lenkwinkel (γ) als Steuersignal für die Steuereinheit (18) vorgibt.

7. Mähdrescher (1) nach einem der vorangehenden Ansprüche, **dadurch gekennzeichnet, dass** die Aktoren (19) dazu eingerichtet sind, den vorderen Rahmenabschnitt (28) des jeweiligen Halmteilers (10) in eine eingeschwenkte Transportstellung, in welcher der jeweilige Halmteiler (10) im Wesentlichen quer zum Vorsatzgerät (2, 3) orientiert ist, und in eine ausgeschwenkte Arbeitsstellung, in welcher der jeweilige Halmteiler (10) im Wesentlichen senkrecht zum Vorsatzgerät orientiert ist, zu überführen.

## Claims

1. A combine harvester (1), with a chassis (11) with at least two chassis wheels (12, 13) which lie on opposite with respect to the longitudinal axis (LA) of the vehicle, wherein the chassis (11) has a propulsion unit for the production of propulsion along a curved path (42) and a steering device for setting a nominal trajectory as a function of a steering angle (γ), as well as with a front attachment (2, 3) for picking up harvested material, wherein crop dividers (10) for dividing harvested material at a boundary between field crop which remains standing and field crop to be harvested are disposed laterally on the front attachment (2, 3) at least the tip (34) of which, viewed in the forward travel direction (FR) of the combine harvester (1), protrudes beyond the front attachment (2, 3), wherein the crop dividers (10) can be pivoted about a vertical axis (20) by a respective actuator (19), wherein the steering device (16) is connected to a control unit (18) which is configured to control the actuators (19) in order to execute a pivotal movement of the respective crop divider (10) as a function of the steering angle (γ), wherein the tip (34) of the respective crop divider (10) follows a curved path (47) which is coaxial with the curved path (42) of the combine harvester (1), **characterized in that**
the actuators (19) are configured as hydraulic cylinders (35), wherein the hydraulic cylinders (35) are configured as electro-hydraulic, proportionally controlled differential cylinders.

2. The combine harvester (1) according to the preceding claim, **characterized in that** the respective crop divider (10) comprises a main divider (21) which is disposed on a profiled frame element (22).

3. The combine harvester (1) according to claim 2, **characterized in that** the frame element (22) is configured in at least two parts, wherein a front frame section (28) and a rear frame section (29) are connected together by a joint (30) which is disposed coaxially with the main axis (20), by means of which the front frame section (28) of the frame element (22) can be pivoted about the main axis (20).

4. The combine harvester (1) according to one of the preceding claims, **characterized in that** the height of the respective crop divider (10) can be adjusted with respect to the front attachment (2, 3) by an additional actuator (38).

5. The combine harvester (1) according to claim 4, **characterized in that** the control unit (18) is configured to receive and analyse a control signal for controlling the additional actuators (38) which serves for the adjustment of a vertical distance (41) between the front attachment (2, 3) and the ground (B).

6. The combine harvester (1) according to one of the preceding claims, **characterized in that** a steering wheel (16) with an associated steering angle encoder (17) is provided which specifies the steering angle (γ) as a control signal for the control unit (18).

7. The combine harvester (1) according to one of the preceding claims, **characterized in that** the actuators (19) are configured to transpose the front frame section (28) of the respective crop divider (10) into a swung-in transport position in which the respective crop divider (10) is orientated substantially transversely to the front attachment (2, 3), and into a swung-out working position in which the respective crop divider (10) is orientated substantially perpendicularly to the front attachment.

## Revendications

1. Moissonneuse-batteuse (1), comprenant un train de roulement (11) doté d'au moins deux roues de train de roulement (12, 13) situées en vis-à-vis l'une de l'autre par rapport à l'axe longitudinal du véhicule (LA), le train de roulement (11) présentant un système de transmission, destiné à générer une propulsion le long d'une trajectoire courbe (42), et un dispositif de direction destiné au réglage d'une courbe de trajectoire de consigne en fonction d'un angle de braquage (γ), et comprenant un outil frontal (2, 3) destiné au ramassage de produits à récolter, des diviseurs de tiges (10) étant prévus sur les côtés de l'outil frontal (2, 3) aux fins de diviser les produits à récolter à l'emplacement d'une limite entre des végétaux devant rester et ceux devant être moissonnés, lesquels diviseurs dépassent par rapport à l'outil frontal (2, 3), au moins avec leur pointe (34), vu dans la direction de déplacement avant (FR) de la moissonneuse-batteuse (1), les diviseurs de tiges (10) pouvant être pivotés autour d'un axe vertical (20), respectivement à l'aide d'un actionneur (19), sachant que le dispositif de direction (16) est relié à une unité de commande (18) qui est conçue pour commander les actionneurs (19) en vue de l'exécution d'un mouvement pivotant du diviseur de tiges (10) respectif, en fonction de l'angle de braquage (γ), la pointe (34) du diviseur (10) respectif suivant une trajectoire courbe (47) qui est coaxiale à la trajectoire courbe (42) de la moissonneuse-batteuse (1),
**caractérisée en ce que** les actionneurs (19) sont réalisés sous forme de vérins hydrauliques (35), les vérins hydrauliques (35) étant réalisés comme vérins différentiels à commande électrohydraulique proportionnelle.

2. Moissonneuse-batteuse (1) selon la revendication précédente, **caractérisée en ce que** le diviseur de tiges (10) respectif comprend un diviseur principal (21) qui est disposé sur un élément formant châssis (22) profilé.

3. Moissonneuse-batteuse (1) selon la revendication 2, **caractérisée en ce que** l'élément formant châssis (22) est réalisé au moins en deux parties, une partie de châssis avant (28) et une partie de châssis arrière (29) étant reliées l'une à l'autre par une articulation (30) qui est disposée coaxialement à l'axe vertical (20) et par l'intermédiaire de laquelle la partie de châssis avant (28) de l'élément formant châssis (22) peut être pivotée autour de l'axe vertical (20).

4. Moissonneuse-batteuse (1) selon une des revendications précédentes, **caractérisée en ce que** le diviseur de tiges (10) respectif peut être réglé en hauteur par rapport à l'outil frontal (2, 3) à l'aide d'un actionneur (38) supplémentaire.

5. Moissonneuse-batteuse (1) selon la revendication 4, **caractérisée en ce que**, en vue de la commande des actionneurs (38) supplémentaires, l'unité de commande (18) est conçue pour recevoir et évaluer un signal de commande qui sert au réglage d'une distance verticale (41) de l'outil frontal (2, 3) par rapport au sol (B).

6. Moissonneuse-batteuse (1) selon une des revendications précédentes, **caractérisée en ce qu'**il est prévu un volant (16) avec un capteur d'angle de braquage (17) associé qui prédéfinit l'angle de braquage (γ) en tant que signal de commande pour l'unité de commande (18).

7. Moissonneuse-batteuse (1) selon une des revendications précédentes, **caractérisée en ce que** les actionneurs (19) sont conçus pour amener la partie de châssis avant (28) du diviseur de tiges (10) respectif dans une position de transport pivotée rentrée, dans laquelle le diviseur de tiges (10) respectif est orienté sensiblement transversalement par rapport à l'outil frontal (2, 3), et dans une position de travail pivotée sortie, dans laquelle le diviseur de tiges (10) respectif est orienté sensiblement perpendiculairement par rapport à l'outil frontal.
